# EUROPEAN PATENT SPECIFICATION

(11) **EP 1 827 656 B1**
(45) Date of publication and mention of the grant of the patent: **04.05.2011**
(21) Application number: 05800552.1
(22) Date of filing: 12.10.2005
(51) Int. Cl.: B01D 53/62, B01D 53/14

(54) **METHOD FOR REMOVING AND RECOVERING CO2 FROM AN EXHAUST GAS**
VERFAHREN ZUR ENTFERNUNG UND RÜCKGEWINNUNG VON CO2 AUS EINEM ABGAS
PROCEDE D'ELIMINATION ET DE RECUPERATION DE CO2 A PARTIR D'UN GAZ D'ECHAPPEMENT

(30) Priority: 20.10.2004 NO 20044456
(43) Date of publication of application: 05.09.2007
(73) Proprietor: NORSK HYDRO ASA, 0240 Oslo (NO)
(72) Inventor: ÅSEN, Knut, Ingvar, N-3940 Porsgrunn (NO); EIMER, Dag, Arne, N-3931 Porsgrunn (NO)
(74) Representative: Lajer, Dorte
(86) International application number: PCT/NO2005/000379
(87) International publication number: WO 2006/043820

(56) References cited:
- EP-A1- 0 453 059
- WO-A1-00/48709
- US-A1- 2003 209 142

## Description

The present invention relates to a method for removing and recovering CO₂ from exhaust gas from a gas turbine based electric power and heat generation process by chemical absorption and desorption for deposition of CO₂ as convenient at the location.

Due to the environmental aspects of CO₂ as a gas with a greenhouse effect, and taxes on the emission of CO₂ by some national governments, the possibility of reducing the emissions of CO₂ to the atmosphere from electric power and heat generating processes, in a way that implies reduced energy consumption and investment costs, has been widely discussed.

Conventional gas turbine based electric power and heat generating processes, using carbon containing fuels and where the oxygen source is air, have carbon dioxide concentrations in the range of 3-5% in the combustion products, hereinafter called exhaust gas, dependent on the fuel and operating conditions of the gas turbine. Thus, a reduction in the emission of carbon dioxide to the atmosphere makes it necessary to separate the carbon dioxide from the exhaust gas. It will be too expensive to compress and deposit the whole exhaust gas. The compression of the recovered CO₂ for deposition in e.g. a geological formation is an implied part of any recovery method.

The concentration or partial pressure of carbon dioxide in the exhaust gas may be raised to higher levels by recirculating exhaust gas as suggested by e.g. Chiesa et al. (paper presented at the International Gas Turbine & Aero engine Congress & Exhibition Stockholm, Sweden - June 2-5, 1998) in a coal based Integrated Gasification and Combined Cycle (IGCC) plant or described by Rønning et al. in Norwegian patent 180520.

CO₂ can be removed from exhaust gas by means of several separation processes, e.g. chemically active absorption processes, physical absorption processes, adsorption by molecular sieves, membrane separation, and cryogenic techniques.

Chemical absorption by means of alkanol amines is presently considered the most practical and economical method to separate CO₂ from exhaust gas at near atmospheric pressure. In fact MEA (monoethanol amine) is the absorption medium that dominates due to its high affinity for CO₂ even at low partial pressure of CO₂. However, new and more efficient absorption mediums are claimed ("Development and Application of Flue Gas Carbon Dioxide Recovery Technology" T. Mimura et. al. 2000, Paper presented at GHGT-5 Cairn, Australia, 13-16 August, 2000).

The application of MEA for absorbing CO₂ from exhaust gas has been described in the literature by Pauley et al. (Proceedings of the Gas Conditioning Conference, Norman, Ok, March 5-7, 1984, paper H; an abbreviated version in Oil & Gas J., May 14, 1984, pp 87-92). They describe a CO₂ removal system based on MEA with additives. There are, however, descriptions of corrosion problems, MEA degradation, and high chemicals consumption. In the described method the exhaust gas pressure was essentially atmospheric with typically 8.5% CO₂ in the feed stream to the absorber. This represents a higher CO₂ partial pressure than will be experienced in exhaust gas from a conventional gas turbine process.

It is further known (see e.g. Fang-Yuan Jou et al., Can.J.Chem.Eng, 1993, vol 71, April, 264-268) that use of other amines than MEA, particularly tertiary amines like MDEA (methyldiethanolamine) is less prone to degradation, and its vapour pressure is lower than MEA's leading to lower losses of amine vapour with the gas streams leaving. The corrosion problems are also lower than if MEA is used. The use of tertiary amines, however, for treating gas turbine exhaust gas is today uneconomical due to these amines' lower affinity for CO₂ compared to MEA. Hence CO₂ removal from exhaust gas is done by absorption in a more reactive amine like MEA. The application of MDEA requires that exhaust gas is compressed to an elevated pressure to increase the partial pressure of CO₂ since this increases the possible loading (mol CO₂/mol amine) of CO₂ in the MDEA solution.

An improved process for compression of exhaust gas is known from European patent 1159056. The patent describes a method for removing and recovering CO₂ from exhaust gas from a power and/or heat generation process (a main power process) by chemical absorption and desorption respectively. The exhaust gas from a first gas turbine is cooled and recompressed to an elevated pressure in a compressor in a secondary power plant before entering a chemical absorption process at elevated pressure. The CO₂-depleted exhaust gas emerging from the absorber is reheated and further expanded in an expander in said secondary power plant.

Furthermore, the international patent application WO04/026445 describes a method where exhaust gas from a first gas turbine cycle is compressed before absorption of CO₂. The compression is performed in preferably several steps with intercooling before the oxygen containing exhaust gas is cooled and fed to a CO₂ absorption process.

The different processes described in the above mentioned publications involve significant changes in the steam cycle if a CO₂ absorption/desorption plant and eventually also a secondary power plant is connected to the main power plant. The CO₂ absorption and desorption process consumes a significant amount of steam that is extracted from the steam cycle. This implies reduced utilisation of the steam turbines and reduced power generation if the secondary power process is connected to an already existing main power process. Additional steam may be generated in an auxiliary steam generator to make up for the loss in steam to the low pressure steam turbines, but this is not a very efficient and cost effective option.

The two stage power plant concept suggested in WO04/026445 will reduce the steam production in the first power plant and thus the electric power generation since part of the cooled CO₂ depleted exhaust gas is heat exchanged with exhaust gas in the first power plant. Due to the limited temperature of the exhaust gas from the first power cycle (normally below 600°C) the gas entering the gas turbine expander in the second power plant will have a temperature that is significantly lower than the temperature in the combustion chamber in said second power cycle. Also the suggested addition of water to the CO₂ depleted exhaust gas may reduce the inlet temperature to the turbine in the second power cycle. This will reduce the efficiency of the total process as well as reduce the total power production.

As described the concentration of carbon dioxide in the exhaust gas may be raised to higher levels by recirculating exhaust gas suggested by e.g. Chiesa et al. (paper presented at the International Gas Turbine & Aeroengine Congress & Exhibition Stockholm, Sweden - June 2-5, 1998) in a coal based Integrated Gasification and Combined Cycle (IGCC) plant or described by Rønning et al. in Norwegian patent 180520. This also implies significant changes in the power generation process due to the recycle of up to 50% of the exhaust gas. The alternative solution as described in the European patent 1159056 and WO04/026445 also implies significant changes in the power generation process due to significant integration between the two power generation processes connected in series. The suggested absorption of CO₂ at high pressure (as described e.g. in WO04/026445) before the exhaust gas is depressurised in the turbine expander will significantly increase the pressure drop between the compressor and the turbine expander and thus reduce the thermal efficiency of the secondary electric power and heat generation process.

As disclosed in European patent 1159056 the high pressure CO₂ depleted exhaust gas generated in the secondary power process plant is reheated in a high temperature fired heater located in the main or first power process plant and further transported back to the secondary power process plant where the heated gas enters a turbine. A high turbine inlet temperature is advantageous since this will increase the thermal efficiency of the power process plant. This applies to all gas turbine cycles according to the principle of the Brayton cycle. Reheating of the CO₂ depleted exhaust gas in the first or main power process plant will increase the fuel consumption without increasing the air flow through the gas turbine and thus increase the concentration of CO₂ in exhaust gas from the first or main power process plant. The concentration of CO₂ is not further increased in the secondary power process plant.

Application of said method described in European patent 1159056 requires that the main or first electric power and heat generation process plant is being modified and it can not be operated independently of the secondary power process. Therefore, it will be advantageous to increase the concentration of CO₂ in the secondary power process instead in order to avoid mechanical modifications of the first or main power process.

Further, as described in patent 1159056, other amines than MEA, i.e. tertiary amines like MDEA (methyldiethanolamine) can be used if the exhaust gas is compressed to an elevated pressure. MDEA need less energy in the desorption process than MEA. However, if a more efficient absorption medium is used than the conventional MEA solution e.g. aqueous hindered amine solution as disclosed in US patent 5603908, the difference between the energy consumption of CO₂ captured at close to atmospheric pressure and the energy consumption of CO₂ captured at elevated pressure is reduced. Thus, if a more efficient secondary power process plant can be developed, adsorption of CO₂ at close to ambient pressure becomes more attractive. If CO₂ is adsorbed at elevated pressure, a CO₂ separation process must for instance be installed between the combustion chamber and the expansion turbine. This will cause losses due to increased pressure drop. Reheating of CO₂ depleted exhaust gas with CO₂ rich exhaust gas exiting the combustion chamber in a gas/gas heat exchanger may increase the temperature of the CO₂ depleted exhaust gas close to the temperature of the CO₂ rich exhaust gas exiting the combustion chamber. However, due to the needed driving force for heat transfer and secondary to avoid a too large heat transfer area, the temperature of the reheated gas will always be below the temperature of the gas coming from the combustion chamber. This temperature drop will cause additional losses according to the principle of the Brayton cycle.

If CO₂ is separated after expansion of the exhaust gas, a more optimal gas turbine cycle process may be used.

The main objective of the present invention was to arrive at an improved method for capture and recovering of CO₂ in exhaust gas from a main gas turbine based electric power and heat generation process in a way that implies increased thermal efficiency and reduced investment and operating costs per kW installed capacity.

Another objective of the present invention was to arrive at an improved method for capture and recovering of CO₂ from exhaust gas from a main gas turbine based electric power and heat generation process in a way that will not reduce utilisation of the installed steam turbines.

A further objective of the present invention was to arrive at an improved method for capture and recovering of CO₂ from exhaust gas from a main gas turbine based electric power and heat generation process in a way that reduces the shut down period of the main electric power and heat generation process when a chemical absorption and desorption process or any other process capable of separating CO₂ from exhaust gas is constructed and connected to the said main power process.

Still another objective of the present invention was to arrive at an improved method for capture and recovering of CO₂ from exhaust gas from a main gas turbine based electric power and heat generating process in a way that will not require mechanical modifications of installed equipments in the main power and heat generation process.

Still another objective of the present invention was to arrive at an improved method for capture and recovering of CO₂ from exhaust gas from a main gas turbine based electric power and heat generation process in a way that will reduce the thermal and electric power losses in any secondary electric power and heat generation process.

Still a further objective of the present invention was to arrive at an improved method for capture and recovering of CO₂ from exhaust gas from a main gas turbine based electric power and heat generating process in a way that implies increased concentration of CO₂ in the exhaust gas without recycling of exhaust gas.

In view of the above mentioned challenges associated with reconstruction of a conventional electric power and heat generation process to include a chemical absorption and desorption process for capture of CO₂ or any other process capable of separating CO₂ from exhaust gas, research has been made.

The inventors found that the problems mentioned above can be solved if a secondary electric power and heat generation process is connected to a first main electric power and heat generation process and where a CO₂ absorption and desorption process or any other process capable of separating CO₂ from exhaust gas (i.e. the CO₂ separation process) is connected to the secondary power and heat generation process and where 5-100% of the exhaust gas from the main power and heat generation process is fed to the secondary heat and power generation process. The secondary process is designed to supply a sufficient amount of heat and power required to operate the CO₂ separating process. Any additional production of electric power and heat may be exported to the grid. Thus the secondary electric power and heat generation process including a CO₂ separation process can then be connected to the main process without interfering with or reducing the capacity of the main process. Since the secondary power process including the CO₂ separating process has no connection to the main process except for the exhaust gas duct from said main process the time needed to connect the two power and heat generation processes is reduced. This will reduce the required shut down period. This has a significant cost saving effect since the loss in production of electric power from the main power process is reduced to a minimum due to the reduced shut down time. It also allows building of a conventional gas turbine based power and heat generation plant that may be operated for several years before the secondary gas turbine based electric power and heat generation process plant including the CO₂ separation process is constructed and connected to the first power and heat generation process. This will have significant economic benefits during the construction period of the secondary power and heat generation process plant.

Different from both European patent 1159056 and WO04/026445 the exhaust gas from the main gas turbine power plant is used as oxidant in a secondary gas turbine combustion chamber installed in the secondary power process and before the exhaust gas is entering the CO₂ separation process. Thus the concentration of CO₂ in the exhaust gas will be raised from 3-5% in the first power plant to 7-9% in the secondary power plant.

Different from both the process claimed in WO04/026445 and the method claimed in European patent 1159056 the CO₂ depleted gas is not heat exchanged with the exhaust gas stream in the main electric power and heat generation process. This will eliminate the problems related to the integration of the two electric power and heat generation processes. Different from both European patent 1159056 and WO04/026445 the compressed exhaust gas from the main power process is fed directly to a combustion chamber where a carbon containing fuel is combusted and the resulting hot exhaust then enters a turbine where the pressure is reduced to close to ambient pressure before separation of CO₂. Also different from the prior art is that the combined secondary power and heat generation process and CO₂ separation process is self-sufficient with regard to both thermal heat and electric power or do not interfere with or reduce the capacity of the main power and heat generation process.

The inventors thus found a method for capture and recovering of CO₂ in exhaust gas from a gas turbine based power and heat generation process (a main power process) by absorption and desorption respectively or by any other process capable of separating CO₂ from exhaust gas, where the exhaust gas from the main power process is cooled to below 50°C before being fed to a secondary gas turbine based power and heat generation process (a secondary power process) and where the exhaust gas is compressed adiabatically to elevated pressure (preferably above 5 bar) and further used as oxidant in a secondary gas turbine combustion chamber where the temperature is increased to above 850°C and preferably above 1200°C. The resulting hot exhaust gas is further fed to a turbine connected to an electric power generator where the exhaust gas is depressurised to close to ambient pressure. The depressurised exhaust gas further enters a heat recovery section where the exhaust gas is cooled to preferably below 100°C. Recovered thermal heat is partly used in the CO₂ separation process. Recovered heat may be further partly used to generate steam that may be used to generate power in steam turbines. Further recovered heat may be partly used to heat a heating medium, e.g. water containing glycol.

By the present method the overall process efficiency will be increased and the cost impact during the construction time or during any close downs will be significantly reduced compared with the known technologies. Both plants may be run independently of each other. If the secondary power process including the CO₂ separation process is shut down for e.g. maintenance work, the first plant may still operate on design capacity. If the main power process is shut down for a period of time, the secondary plant including the CO₂ separation process may be operated close to design capacity. The main power plant may be constructed and operated for several years without CO₂ capture. The secondary power plant including a CO₂ separation process may be constructed and connected to the main power plant without modifications of the main power process since all necessary utilities will be supplied from the secondary power process. This will also ensure that the capacity of the installed steam turbines in the main power process can be 100% utilised. The CO₂ capture at close to atmospheric pressure using a more efficient absorption medium instead of capture at elevated pressure will reduce the complexity of the secondary power plant since extraction of compressed exhaust gas before or after the combustion chamber for treatment in a high pressure CO₂ separation process is avoided. According to the Brayton cycle this will also improve the cycle thermal efficiency since both the pressure drop and temperature drop are reduced.

The invention will be further explained and envisaged in the following figure and example.

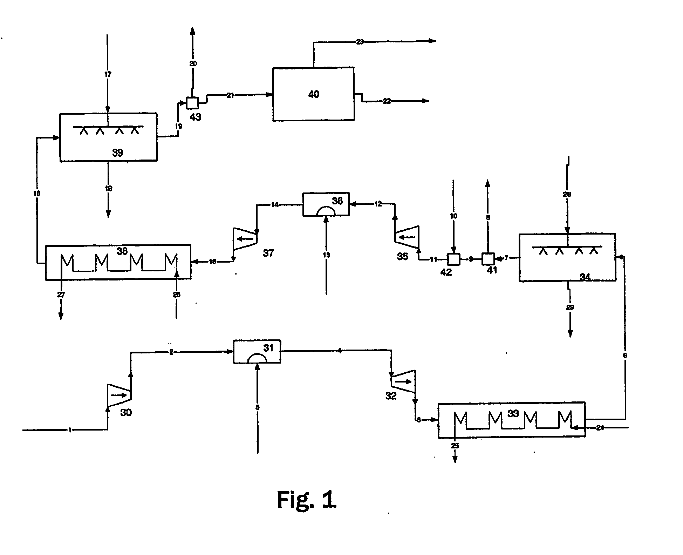

Figure 1 shows a post combustion process according to the present invention including two Gas Turbine Combined Cycle (CCGT) plants in series with only one CO₂ scrubbing plant. The CO₂ scrubbing is performed essentially close to atmospheric pressure.

### Figure 1

Air 1 enters compressor 30 and is compressed to between 10 and 40 bar before being fed to a combustor 31 where a fuel 3 is combusted. The hot combusted gas 4 then enters turbine 32. This unit may drive a compressor or electrical generator. Exhaust gas 5 at low pressure enters a waste gas heat recovery unit 33 where steam 25 is generated by evaporating boiler feed water 24. Partly cooled exhaust gas 6 at about 100°C is further cooled in a cooling tower 34 by means of circulating cooling water 28. Used water 29 is disposed of or partly recycled. Application of a cooling tower is only shown as an example and the present invention is not restricted to the use of this unit. The exhaust gas 6 may also be cooled in a water-cooled heat exchanger or by any other means.

Condensed water 8 is separated in unit 41 and fresh air 10 is optionally added in mixer 42. Oxygen containing gas stream 11 enters compressor 35 and is compressed to between 5 and 40 bar before being fed to a combustor 36 where a fuel 13 is combusted. The hot combusted gas 14 then enters turbine 37. This unit may drive a compressor or electrical generator. Exhaust gas 15 at close to ambient pressure enters a waste gas heat recovery unit 38 where steam 27 is generated by evaporating boiler feed water 26. Partly cooled exhaust gas 16 is optionally further cooled in a cooling tower 39 by means of circulation cooling water 17. Used water 18 is disposed of or partly recycled. Application of a cooling tower is only shown as an example and the present invention is not restricted to the use of this unit. The exhaust gas 16 may also be cooled in a water-cooled heat exchanger or by any other means.

Any condensed water 20 is separated in unit 43. The CO₂ containing exhaust gas stream 21 enters a CO₂ separation process (i.e. an CO₂ absorption and desorption process) 40 where preferably more than 80% of the CO₂ content is removed. Captured CO₂ 22 may be compressed and dried in preparation to be deposited in a geological formation. CO₂ depleted exhaust gas is vented off 23. Heat recovered from the exhaust gas may be partly used in unit 40.

The main principle of the concept as shown in Figure 1 is that exhaust gas from the first CCGT plant is cooled to below 100°C before being fed to a second CCGT plant. The exhaust gas from this second CCGT plant is cooled to preferably below 100°C and fed to a CO₂ absorption and desorption plant. The concept has several advantages compared to the traditional post combustion concepts:
- One CO₂ scrubbing plant (scaled up in the desorption section) can serve two full-scale CCGT plants (each 390 MW) instead of one without increasing the number or size of the absorption columns since this unit basically is scaled against the total volume flow of exhaust gas. As shown in Table 1 below the total amount of exhaust gas from the second power process is not increased compared with the amount of exhaust gas from the main power process. This will reduce investment cost per kWh produced.
- The concentration of CO₂ in the exhaust gas is increased from about 4% to above 8% and that may improve absorption efficiency.
- The second CCGT plant including the CO₂ absorption and desorption plant can be connected to an already existing CCGT plant with only minor modifications in the existing plant.

### Example

Table 1 shows composition of the exhaust gas stream 9 and the exhaust gas stream 21.

In a traditional post combustion process the exhaust gas stream 9 (77987 kmol/hr) containing 4.3% CO₂ is treated in a CO₂ absorption and desorption process. The output from this electric power plant inclusive CO₂ capture, will be about 330 MW if the fuel to electric power efficiency is 48.5% (measured as low heating value) and if a conventional absorption medium is applied. The output will be about 395 MW without CO₂ separation.

If exhaust gas stream 9 instead is fed to a secondary gas turbine combined cycle power plant of about the same size as the first one, the exhaust gas stream 21 (after condensation and removal of water) from the secondary process will contain 8.8% CO₂. The amount of gas is reduced to 75172 kmol/hr. Thus introducing a secondary power process in series with a main power process the concentration of CO₂ in the gas stream entering the CO₂ separation plant is increased from 4.3% to 8.8% while the amount of gas to be treated is slightly reduced. The power output from this novel two-stage power process will be about 790 MW exclusive CO₂ separation. According to Mimura et al. ("Development and application of flue gas carbon dioxide recovery technology". Paper presented at the Green House Gas Technology conference in Cairns, Australia, 13-16 August 2000) the increase in the concentration of CO₂ in the exhaust gas from about 4.3% CO₂ to 8.8% CO₂ will reduce the energy requirement with about 10%. The total power output thus will be about 675 MW while the power output from two separate power plants including an absorption and desorption process will be about 360 MW. In this case the total electric power plant efficiency is increased from 48.5% to about 49.5%. Another advantage is that the size of the absorption process is reduced compared to the alternative with two power plants in parallel. This is because the amount of gas to be treated is reduced with more than 50%.

**Table 1**

| | **Stream 9** | **Stream 21** |
|---|---|---|
| CO₂ (mol%) | 4.25 | 8.80 |
| N₂ (mol%) | 79.81 | 82.82 |
| O₂ (mol%) | 13.61 | 6.02 |
| Argon (mol%) | 0.95 | 0.99 |
| H₂O (mol%) | 1.37 | 1.37 |
| Temp. (°C) | 15 | 15 |
| Flow (kmol/hr) | 77987 | 75172 |

## Claims

1. A method for capture of CO₂ from exhaust gas (6) from a gas turbine based main power and heat generation process,
**characterized in that**
the exhaust gas (6) from said main power process is cooled before being fed to a secondary gas turbine based power and heat generation process where said exhaust gas (11) is compressed to elevated pressure and used as oxidant in a secondary gas turbine combustion chamber (36) in said secondary power process,
the resulting hot exhaust gas (14) from said secondary process is further fed to a turbine (37) connected to an electric power generator where the exhaust gas (14) is depressurised to close to ambient pressure before entering a heat recovery process (38) where the exhaust gas is cooled and further fed to a CO₂ separation process (40) for capturing of CO₂, wherein said secondary power process and said CO₂ separation process are only connected with the main power process via the main power process exhaust gas duct (8).

2. A method according to claim 1,
**characterized in that**
said exhaust gas from said main power process is cooled to below 100°C.

3. A method according to claim 1,
**characterized in that**
the exhaust gas from the main power process is cooled to below 30°C.

4. A method according to claim 1,
**characterized in that**
said exhaust gas from said main power process is compressed adiabatically to elevated pressure, preferably above 5 bar.

5. A method according to claim 1,
**characterized in that**
the CO₂ containing exhaust gas is compressed without intercooling to between 5 and 40 bar in the secondary power plant.

6. A method according to claim 1,
**characterized in that**
the temperature in said combustion chamber is above 850°C or preferably above 1200°C.

7. A method according to claim 1,
**characterized in that**
said depressurised exhaust gas is cooled to below 100°C.

8. A method according to claim 1,
**characterized in that**
the exhaust gas from the secondary power plant is cooled to below 80°C.

9. A method according to claim 1,
**characterized in that**
recovered heat is used to generate steam to be used to generate power in steam turbines and/or to heat a heating medium.

10. A method according to claim 1,
**characterized in that**
the CO₂ separation process is an absorption and desorption process or any other process capable of separating CO₂ from exhaust gas.

11. A method according to claim 1,
**characterized in that**
the heat needed in said CO₂ separation process is extracted from the secondary power process.

12. A method according to claim 1,
**characterized in that**
5-100% of the exhaust gas generated in the main power process is fed to the secondary power process.

13. A method according to claim 1,
**characterized in that**
ambient air is mixed with the exhaust gas from the main power process before entering the secondary power process.

14. A method according to claim 1,
**characterized in that**
the secondary power process is started up using ambient air.

## Patentansprüche

1. Verfahren zum Einfangen von CO₂ aus einem Abgas (6) von einem gasturbinenbasierten Hauptkraft- und Wärmeerzeugungsprozess,
**dadurch gekennzeichnet, dass**
das Abgas (6) vom Hauptkraftprozess abgekühlt wird, bevor es einem gasturbinenbasierten Sekundärkraft- und Wärmeerzeugungsprozess zugeführt wird, wobei das Abgas (11) zu einem erhöhten Druck komprimiert und als ein Oxidationsmittel in einer Gasturbinen-Sekundärverbrennungskammer (36) im Sekundärkraftprozess verwendet wird,
das resultierende heiße Abgas (14) vom Sekundärprozess ferner einer mit einem elektrischen Stromerzeuger verbundenen Turbine (37) zugeführt wird, wobei das Abgas (14) auf nahezu einen Umgebungsdruck reduziert wird, bevor es in einen Wärmerückgewinnungsprozess (38) eintritt, wobei das Abgas abgekühlt und ferner einem CO₂-Trennprozess (40) zum Einfangen von CO₂ zugeführt wird,
wobei der Sekundärkraftprozess und der CO₂-Trennprozess nur über den Hauptkraftprozess-Abgaskanal (8) mit dem Hauptkraftprozess verbunden werden.

2. Verfahren nach Anspruch 1, **dadurch gekennzeichnet, dass** das Abgas vom Hauptkraftprozess auf unter 100°C abgekühlt wird.

3. Verfahren nach Anspruch 1, **dadurch gekennzeichnet, dass** das Abgas vom Hauptkraftprozess auf unter 30°C abgekühlt wird.

4. Verfahren nach Anspruch 1, **dadurch gekennzeichnet, dass** das Abgas vom Hauptkraftprozess adiabatisch zu einem erhöhten Druck, bevorzugt über 5 bar, komprimiert wird.

5. Verfahren nach Anspruch 1, **dadurch gekennzeichnet, dass** das CO₂-enthaltende Abgas ohne Ladeluftkühlung auf zwischen 5 und 40 bar im Sekundärkraftwerk komprimiert wird.

6. Verfahren nach Anspruch 1, **dadurch gekennzeichnet, dass** die Temperatur in der Verbrennungskammer über 850°C oder bevorzugt über 1200°C beträgt.

7. Verfahren nach Anspruch 1, **dadurch gekennzeichnet, dass** das druckreduzierte Abgas auf unter 100°C abgekühlt wird.

8. Verfahren nach Anspruch 1, **dadurch gekennzeichnet, dass** das Abgas vom Sekundärkraftwerk auf unter 80°C abgekühlt wird.

9. Verfahren nach Anspruch 1, **dadurch gekennzeichnet, dass** rückgewonnene Wärme zur Erzeugung von Dampf verwendet wird, welcher zur Krafterzeugung in Dampfturbinen und/oder zur Erwärmung eines Heizmediums verwendet werden soll.

10. Verfahren nach Anspruch 1, **dadurch gekennzeichnet, dass** der CO₂-Trennprozess ein Absorptions- und Desorptionsprozess oder irgendein anderer Prozess ist, der in der Lage ist, CO₂ vom Abgas zu trennen.

11. Verfahren nach Anspruch 1, **dadurch gekennzeichnet, dass** die im CO₂-Trennprozess erforderliche Wärme aus dem Sekundärkraftprozess extrahiert wird.

12. Verfahren nach Anspruch 1, **dadurch gekennzeichnet, dass** 5-100 % des im Hauptkraftprozess erzeugten Abgases dem Sekundärkraftprozess zugeführt werden.

13. Verfahren nach Anspruch 1, **dadurch gekennzeichnet, dass** vor Eintritt in den Sekundärkraftprozess eine Umgebungsluft mit dem Abgas vom Hauptkraftprozess gemischt wird.

14. Verfahren nach Anspruch 1, **dadurch gekennzeichnet, dass** der Sekundärkraftprozess bei Verwendung von Umgebungsluft gestartet wird.

## Revendications

1. Procédé pour la récupération du CO₂ à partir d'un gaz d'échappement (6) venant d'un processus principal de génération de puissance et de chaleur à base d'une turbine à gaz,
**caractérisé en ce que**
le gaz d'échappement (6) venant dudit processus principal de puissance est refroidi avant d'être alimenté à un deuxième processus de génération de puissance et de chaleur à base d'une turbine à gaz, où ledit gaz d'échappement (11) est comprimé à une pression élevée et utilisé en tant qu'un oxydant dans une deuxième chambre de combustion de turbine à gaz (36) dans ledit deuxième processus de puissance,
le gaz d'échappement (14) résultant et chaud dudit deuxième processus est en outre alimenté à une turbine (37) reliée à un générateur d'énergie électrique où le gaz d'échappement (14) est dépressurisé à la proximité de la pression ambiante avant d'entrer dans un processus de récupération du chaleur (38) où le gaz d'échappement est refroidi et en outre alimenté à un processus de séparation de CO₂ (40) pour la récupération du CO₂,
où ledit deuxième processus de puissance et ledit processus de séparation de CO₂ sont seulement reliés avec le processus principal de puissance par l'intermédiaire du conduit (8) du gaz d'échappement venant du processus principal de puissance.

2. Procédé selon la revendication 1,
**caractérisé en ce que**
ledit gaz d'échappement venant dudit processus principal de puissance est refroidi à une température inférieure à 100°C.

3. Procédé selon la revendication 1,
**caractérisé en ce que**
le gaz d'échappement venant dudit processus principal de puissance est refroidi à une température inférieure à 30°C.

4. Procédé selon la revendication 1,
**caractérisé en ce que**
ledit gaz d'échappement venant dudit processus principal de puissance est comprimé adiabatiquement à une pression élevée, de préférence au-dessus de 5 bar.

5. Procédé selon la revendication 1,
**caractérisé en ce que**
le gaz d'échappement contenant le CO₂ est comprimé sans refroidissement intermédiaire à un niveau compris entre 5 et 40 bar dans la deuxième plante électrique.

6. Procédé selon la revendication 1,
**caractérisé en ce que**
la température dans ladite chambre de combustion est au-dessus de 850°C ou de préférence au-dessus de 1200°C.

7. Procédé selon la revendication 1,
**caractérisé en ce que**
ledit gaz d'echappement dépressurisé est refroidi à une température inférieure à 100°C.

8. Procédé selon la revendication 1,
**caractérisé en ce que**
le gaz d'échappement venant de la deuxième plante électrique est refroidi à une température inférieure à 80°C.

9. Procédé selon la revendication 1,
**caractérisé en ce que**
la chaleur récupérée est utilisé pour la génération du vapeur dans des turbines à vapeur et/ou pour le réchauffement d'un milieu de chauffage.

10. Procédé selon la revendication 1,
**caractérisé en ce que**
le processus de séparation de CO₂ est un processus d'absorption et de désorption ou un processus quelconque capable de séparer le CO₂ du gaz d'échappement.

11. Procédé selon la revendication 1,
**caractérisé en ce que**
la chaleur nécessaire dans ledit processus de separation de CO₂ est extrait du deuxième processus de puissance.

12. Procédé selon la revendication 1,
**caractérisé en ce que**
5-100% du gaz d'échappement généré dans le processus principal de puissance est alimenté au deuxième processus de puissance.

13. Procédé selon la revendication 1,
**caractérisé en ce que**
l'air ambiant est mélangé avec le gaz d'échappement venant du processus principal de puissance avant d'entrer dans le deuxième processus de puissance.

14. Procédé selon la revendication 1,
**caractérisé en ce que**
le deuxième processus de puissance est entamé en utilisant l'air ambiant.
